# EUROPÄISCHE PATENTSCHRIFT

(11) **EP 1 551 576 B1**
(45) Veröffentlichungstag und Bekanntmachung des Hinweises auf die Patenterteilung: **21.01.2009**
(21) Anmeldenummer: 03753561.4
(22) Anmeldetag: 15.10.2003
(51) Int. Cl.: B26B 13/06, B23P 15/40

(54) **VERFAHREN ZUR HERSTELLUNG EINER FRISEURSCHERE, SOWIE FRISEURSCHERE**
METHOD FOR THE PRODUCTION OF HAIRDRESSER'S SCISSORS, AND HAIRDRESSER'S SCISSORS
PROCEDE DE FABRICATION DE CISEAUX DE COIFFURE ET CISEAUX DE COIFFURE

(30) Priorität: 15.10.2002 DE 10248026
(43) Veröffentlichungstag der Anmeldung: 13.07.2005
(73) Patentinhaber: Beck, Christian, 78597 Irndorf (DE); Tim Tuttlinger-Instrumenten-Manufaktur GmbH, 78532 Tuttlinger (DE)
(72) Erfinder: Beck, Christian, 78597 Irndorf (DE)
(74) Vertreter: Kuhnen & Wacker
(86) Internationale Anmeldenummer: PCT/EP2003/011447
(87) Internationale Veröffentlichungsnummer: WO 2004/035242

(56) Entgegenhaltungen:
- EP-A- 0 156 395
- DE-A- 3 219 260
- DE-A- 19 733 035
- DE-A- 19 909 887
- US-A- 1 814 959
- US-A- 3 827 316
- US-A- 5 069 872
- DATABASE WPI Section Ch, Week 198549 Derwent Publications Ltd., London, GB; Class M13, AN 1985-306621 XP002275980 -& JP 60 212187 A (MIKUROEITO KK), 24. Oktober 1985 (1985-10-24)

## Beschreibung

Die Erfindung betrifft gemäß Anspruch 1 ein Verfahren zur Herstellung einer Friseurschere sowie ferner eine Friseurschere gemäß dem Oberbegriff des Anspruches 8.

Scheren bestehen üblicherweise aus zwei Scherenhälften, welche mittels einem Schloß gelenkig miteinander verbunden sind, wobei die beiden Scherenhälften und damit auch die Schneiden häufig aus rostfreien bzw. rostbeständigen Stahllegierungen ausgebildet sind. Solche Scheren weisen jedoch den Nachteil auf, daß sie nach einer relativ kurzen Nutzungsdauer im Bereich der Schneiden an Schärfe verlieren. Aus diesem Grunde ist es auch bekannt, Hartmetallschichten im Bereich der Schneiden aufzutragen. Hierdurch läßt sich die Lebensdauer der Schere wesentlich verlängern, wobei die Schneide aufgrund der Festigkeit des Hartmetalls länger scharf bleibt. Andererseits ist Hartmetall jedoch relativ spröde, weshalb der Herstellungsschritt zum Ausrichten der Friseurschere schwieriger durchzuführen ist, als bei herkömmlichen Scherenblättern aus Stahllegierungen. Bei zu starker Bearbeitung und der daraus resultierenden Verformung kann es hierbei zu Rissen und Brüchen an der Schneide kommen. Dabei hängt die Gleichmäßigkeit des Laufs und die Leichtgängigkeit der beiden Scherenteile von einer möglichst guten wechselseitigen Ausrichtung der Scherenblätter ab. Sofern überhaupt Hartmetall für die Schneiden eingesetzt wird, wird es in der Praxis daher vorgezogen, diesen Werkstoff auf dem Bereich der Schneidkanten zu konzentrieren.

Feiner sind in der Praxis verschiedene Arten von Scheren bekannt, welche zwar jeweils auf dem gleichen Grundprinzip basieren, dabei jedoch je nach Anwendungsfall deutlich voneinander abweichenden Anforderungen unterliegen. So kommt es bei einer herkömmlichen Haushaltsschere im wesentlichen darauf an, daß diese preisgünstig bereitstellbar ist und mit zufriedenstellendem Ergebnis Papier, Stoff oder dergleichen durchtrennt. Daneben gibt es beispielsweise auch chirurgische Scheren, mittels welchen gezielte Schnitte auch in schwer zu schneidendem Körpergewebe im Zuge einer Operation möglich sind. Hierzu weisen diese Scheren üblicherweise lange Holme bei kurzen Schneiden auf, um günstige Hebelverhältnisse zu erlangen und sind zudem aus Materialien ausgebildet, welche besonders korrosionsbeständig sind und auch Sterilisationsvorgängen standhalten. Aus der Praxis sind auch chirurgische Scheren bekannt, bei denen Hartmetallschneiden an den Scherenblättern angefügt bzw. Hartmetallschneiden ausbildende Hartmetallplättchen am Scherenblatt befestigt sind, um die Schneideigenschaften auch bei harten oder widerstandsfähigen organischen Materialien insbesondere auch über die gesamte Dauer einer oder mehrerer Operationen zu gewährleisten. Die Verwendung von Hartmetallschneiden hat sich in diesem Bereich insbesondere deswegen bewährt, weil chirurgische Scheren einer sehr hohen Reibkorrosion im Schneidenbereich unterliegen, da man die Scheren nach der Sterilisation aus hygienischen Gründen nicht ölen darf. Da bei Operationen jedoch nur vereinzelt Schnitte zu setzen sind, sind die ungünstigen Reibungsverhältnisse an den Schneiden derartiger chirurgischer Scheren in der Praxis auch mit Blick auf die günstigen Hebelverhältnisse von untergeordneter Bedeutung.

Eine derartige Schere für medizinische Zwecke ist beispielsweise aus der DE 197 33 035 A1 bekannt. Diese Schere weist zwei gegeneinander schwenkbare Scherenblätter aus einem duktilen Metall sowie Schneiden mit einer Panzerung aus einem verschleißbeständigen Material auf. Das verschleißbeständige Material der Schere wird dabei durch einen Schweißvorgang in eine rechteckige Vertiefung auf einem Scherenblatt eingebracht, so dass das Material die Vertiefung vollständig ausfüllt. Anschließend wird durch Schleifen eine gemeinsame ebene Innenfläche und eine Außenfläche geschliffen, wobei diese Flächen vom Material des Scherenblattes in das aufgeschweißte Material stetig übergehen. Als verschleißbeständiges Material wird hierbei ein Material verwendet, das auf Kobaltbasis beruht.

Aus der DE 32 19 260 A1 ist ein Verfahren zum Einbringen eines harten Materials in einen ausgesparten Beanspruchungsbereich des Grundkörpers eines chirurgischen Instruments, beispielsweise einer Schere, sowie ein entsprechendes chirurgisches Instrument bekannt. Das harte Material wird hierbei mittels eines Schweißverfahrens auf einen Grundkörper, der sich dazu in einer Klemmvorrichtung befindet, aufgebracht. Nach dem Aufbringen der Schweißraupe wird der Grundkörper einschließlich der Schweißraupe einem thermischen Härtungsvorgang bei 1100° C mit anschließendem Abschrecken unterzogen. Nach dem Abschreckvorgang werden die Schweißraupe und der Spitzenbereich des Grundkörpers in ihre endgültige Form geschliffen, wobei auch die Schneide ausgebildet wird.

Bei Friseurscheren ist demgegenüber die Leichtgängigkeit der Schere von herausragender Bedeutung, da sie das wesentliche Arbeitsgerät für eine Friseuse oder einen Friseur darstellen. Sie kommen im Verlauf eines Arbeitstages in großem Maße zum Einsatz, und es sind hiermit viele Hunderte oder gar Tausende von einzelnen Schnitten Tag für Tag zu leisten. Um ein angenehmes Arbeiten mit einer derartigen Friseurschere auch angesichts der hohen Schnittfrequenzen zu ermöglichen, sollten deren Scherenblätter besonders exakt ausgerichtet und reibungsarm gestaltet sein, wodurch sich die für jeden einzelnen Schnittvorgang aufzuwendende Kraft gering halten läßt.

Hierzu ist es aus der Praxis insbesondere bekannt, die Scherenblätter derart zu verschränken, daß die beiden Schneidkanten möglichst exakt immer an genau einem Punkt miteinander in Berührung stehen, wenn ein Schnitt durchgeführt wird, wobei sich dieser Berührungspunkt mit zunehmendem Schließen der Scherenhälften weiter zur vorderen Spitze der Schere verschiebt. Eine derartige Verschränkung der Scherenblätter wird dabei einerseits durch eine Torsion derselben um ihre Längsachse sowie andererseits durch eine Biegung derselben aufeinander zu erzielt. Dieses Ausrichten herkömmlicher Friseurscheren wird dabei im gehärteten und zusammengedrehten Zustand ausgeführt, wobei der gleichmäßige Lauf der beiden Schneidkanten durch leichte Schläge mit einem Hammer beeinflußt und optimiert wird. Allerdings sind auch dieser Verfahrensweise Grenzen gesetzt, da die Schneide bei zu starker Bearbeitung und der daraus resultierenden Verformung zu Beschädigungen neigt. Die Gleichmäßigkeit des Laufs und die Leichtgängigkeit der beiden Scherenteile bei herkömmlichen Friseurscheren ist daher nur begrenzt optimierbar.

Darüber hinaus sind derart ausgebildete Friseurscheren somit nur sehr aufwendig herzustellen, weshalb sie sehr teuer sind. Ferner sind sie auch sehr empfindlich, da bereits ein einmaliges Herunterfallen auf den Fußböden zu einer Verformung der Scherenblätter führen kann, was selbst im Falle einer geringfügigen Verformung bereits eine massive Verschlechterung der Laufeigenschaften der beiden Schneidkanten mit sich bringt. Die Handhabung der Friseurschere erschwert sich dann erheblich, so daß sie im Regelfalle bereits bei einer derartigen Stoßeinwirkung aufgrund beeinträchtigter Ganggenauigkeit und Präzision nicht mehr nutzbar ist.

Ein Beispiel für eine Friseurschere mit Hartmetallschneiden ist der DE 199 09 887 A1 entnehmbar. Das Hartmetall wird hier durch ein thermisches Spritzverfahren in einer Schicht auf einen Grundwerkstoff aufgetragen und anschließend zur Erzielung der Gleitfläche und der Scherkante überschliffen. Durch den Auftrag einer derartigen verschleißmindernden Hartmetallschicht sind die Schneiden nicht so anfällig gegenüber Abnutzung und werden nicht so schnell stumpf wie herkömmliche Friseurscheren. Sie zeigen daher auf Dauer einen geringen Widerstand beim Schließen der Schere, so daß der Kraftaufwand für den Benutzer ebenfalls auf Dauer gering ist. Eine derartige, mit Hartmetallschneiden bestückte Friseurschere läßt es sogar zu, andere Materialien wie Papier oder dergleichen zu schneiden, ohne daß die Schneidfähigkeit bei Haaren danach nicht mehr gegeben ist.

Eine Verformung aufgrund mechanischer Einflüsse wie z. B. bei einem Herabfallen der Friseurschere auf den Boden führt bei der aus der DE 199 09 887 A1 bekannten Friseurschere mit Hartmetallschneiden jedoch dazu, daß sie in der Regel nicht mehr benützt werden kann, da die Verbindung der aufgespritzten Hartmetallschicht mit dem Grundkörper keine ausreichende Stabilität aufweist, um eine Nachbearbeitung zuzulassen. Sofern die Hartmetallschicht nicht bereits aufgrund der Stoßeinwirkung weggebrochen ist, führt die mechanische Einwirkung bei einem erneuten Ausrichten der Schneiden dieser Friseurschere zumeist dazu, daß die Hartmetallschicht abplatzt.

Die ungenügende Haftung der aufgespritzten Hartmetallschicht auf dem Grundkörper ist auch Ursache dafür, daß bereits das erstmalige Ausrichten dieser herkömmlichen Friseurschere problematisch ist. Dabei muß mit größter Vorsicht vorgegangen werden, um die Ausschußrate in Grenzen zu halten. Aus diesem Grunde werden gewöhnlich Abstriche im Hinblick auf die Qualität des Endprodukts hingenommen, um die Herstellungskosten insgesamt im Rahmen zu halten.

Nachteilig an der hartmetallbeschichteten Friseurschere gemäß der DE 199 09 887 A1 ist ferner, daß ein Nachschärfen der Schneiden durch Anschleifen in der Regel allenfalls nur einmal möglich ist, da hierbei das aufgetragene Material entfernt wird und die Schneidkante dann wieder nur aus dem weniger geeigneten Trägermaterial besteht.

Der Erfindung liegt daher die Aufgabe zugrunde, ein Verfahren aufzuzeigen, welches die Fertigung einer leichtgängigen Friseurschere mit hoher Lebensdauer und mechanischer Festigkeit bei der Möglichkeit eines mehrmaligen Nachschliffs der Scherkante erlaubt. Ferner soll eine derartige Friseurschere geschaffen werden.

Diese Aufgabe wird in verfahrenstechnischer Hinsicht mit den Merkmalen gemäß Anspruch 1 gelöst. Ferner wird diese Aufgabe durch eine Friseurschere mit den Merkmalen des Anspruches 8 gelöst.

Das erfindungsgemäße Verfahren zur Herstellung einer Friseurschere gemäß Anspruch 1 sieht dabei die folgenden Schritte vor: Bereitstellen jeweils eines Rohlings für Scherenhälften der Friseurschere, wobei die Scherenhälften jeweils ein Scherenblatt, einen Halm und einen Ring aufweisen, Vorverformen der Scherenblätter um ein vorbestimmtes Krümmungsmaß in die von der Schneide abgewandte Richtung, Aufschweißen eines Hartmetallmaterials in Form einer Schweißraupe jeweils auf die aufeinander zu weisenden Stirnseiten der Scherenblätter zur Ausbildung der Hartmetalllagen für die Schneiden, wobei sich die vorbestimmte Vorverformung der Scherenblätter aufgrund der Wärmeeinwirkung beim Schweißvorgang im wesentlichen zurückbildet, Schleifen der Schweißraupen zur Ausbildung der Schneiden, Verbinden und anschließendes Ausrichten der Scherenhälften, Demontieren und anschließendes Härten der Scherenhälften, Oberflächenbearbeitung der Scherenhälften, erneutes Verbinden der Scherenhälften, und Hartrichten der Friseurschere.

Hierbei wurde erfindungsgemäß erkannt, daß es trotz der hohen Qualitätsanforderungen an die Scherenblätter einer Friseurschere möglich ist, das Material für die Schneiden durch Aufschweißen eines Hartmetallmaterials aufzubringen, wenn dabei die Verformung des Rohlings aufgrund der Wärmeeinwirkung beim Schweißvorgang gezielt berücksichtigt wird. Erfindungsgemäß wird dies durch das Vorverformen der Scherenblätter geleistet, wobei eine derartige Voreinstellung zuverlässig durchgeführt werden kann, da die Schweißnaht vollflächig auf die Stirnseite des Scherenblatts aufgebracht wird, wodurch sich ein Wärmefluß und somit eine Krümmung in nur eine Richtung ergibt. Das Krümmungsverhalten des Rohlings unter der thermischen Einwirkung beim Schweißvorgang kann somit gut vorherbestimmt werden. Dabei wird diese Vorverformung im anschließenden Schweißschritt im wesentlichen zurückgebildet, so daß im Material der Scherenblätter keine wesentlichen Spannungen verbleiben und die Schneiden dabei dennoch im abgekühlten Zustand der Scherenhälften geeignet zueinander angeordnet und durch Schleifen der Scherenblätter ausbildbar sind. Die so ausgebildeten Scherenblätter weisen somit Schneiden auf, die sich über die gesamte Dicke der Scherenblätter erstrecken und als Vollmaterialelemente ausgebildet sind. Daher ist es möglich, auch mehrmalig einen neuen Anschliff der Schneidkante durchzuführen.

Somit bleibt die erfindungsgemäße Friseurschere auf Dauer scharf bzw. kann nachgeschärft werden und ist dabei sehr leichtgängig, da derartige Hartmetalle eine geringe Reibung herstellen, wenn sie gegeneinander ablaufen. Insbesondere ist es bei der erfindungsgemäßen Friseurschere auch möglich, die Schneidkanten in einem sehr spitzen Winkel anzuschleifen, so daß eine rasiermesserscharfe Schneide entsteht, falls dies gewünscht ist. Während bei schneidkanten, aus weicheren Materialien die Spitze des Schneidwinkels einer sehr großen Abnutzung unterliegt, was zu einer schnell nachlassenden Schärfe führt, kann erfindungsgemäß durch die Verwendung einer als Vollmaterial ausgebildeten Hartmetallschneide der Friseurschere zuverlässig verhindert werden, daß beispielsweise beim Aufeinanderlaufen der Schneidkanten ein winziges Stück herausbricht. Dies führt bei herkömmlichen Friseurscheren üblicherweise zu Unbrauchbarkeit, da die Fehlstelle aufgrund der entstandenen Vertiefung oder Unebenheit die gegenüber liegende Schneidkante beschädigt. Diese Problematik läßt sich mit der erfindungsgemäßen Friseurschere mit Hartmetallschneiden vermeiden.

Ferner zeichnet sich die erfindungsgemäße Friseurschere dadurch aus, daß die Schneidkante einer geringen Abnutzung unterliegt, was zu einer verlängerten Haltbarkeit bei gleichbleibendem Schnittbild führt. Überdies ist die durchgängige Hartmetallschicht auch in geringem Maße korrosionsanfällig, was deren Haltbarkeit ebenfalls verbessert. Dabei ist es auch möglich, Fremdmaterialien ohne Verlust der Schneideigenschaften zu schneiden. Dies können auch dünne Drähte, Papier oder ähnliche Materialien sein, da Unebenheiten oder Beschädigungen an der Schneide aufgrund des durchgängigen Hartmetallmaterials vermieden oder durch Neuanschliff und eventuellem Neuausrichten behoben werden können.

Von besonderem Vorteil bei der erfindungsgemäßen Verfahrensweise ist ferner, daß durch den Schweißvorgang eine besonders gute und zuverlässige Verbindung hergestellt wird, da sich im Bereich der Schweißstelle eine Art Legierung aus dem miteinander verschmolzenen Grundmaterial mit dem Hartmetallmaterial ergibt. Hierdurch können mechanische wie auch thermische Spannungen im Material vermieden bzw. ein homogener Übergang zwischen den verbundenen Werkstoffen hergestellt werden. Daher kann ein Wegbrechen einer Schneide vom Scherenblatt zuverlässig unterbunden werden, so daß ein besonders exaktes Ausrichten bzw. Feintrimmen der Schneiden auch mittels Hammerschlägen möglich ist. Falls dies erforderlich sein sollte, beispielsweise nachdem die Schere auf den Boden gefallen ist, kann die Friseurschere daher insgesamt problemlos neu ausgerichtet werden.

Ein weiterer Vorteil des erfindungsgemäßen Verfahrens liegt darin, daß die Schweißraupe bzw. die auf wenigstens zwei Seiten geschliffene Schneide im Hinblick auf eventuelle Poren im Hartmetall oder andere Schweißfehler geprüft werden kann. Derartige Mängel können daher besser erkannt werden, wodurch eine wesentlich größere Produktqualität gewährleistet werden kann.

Ferner läßt sich das Vorkrümmungsmaß für die Vorverformung der Scherenblätter mit relativ geringem Aufwand ermitteln, wobei hierzu z. B. Probeschweißungen für jede Charge an Rohlingen durchgeführt werden können. Hierbei wird berücksichtigt, daß sich der Verformungsgrad von Charge zu Charge geringfügig ändern kann, wobei sich entsprechende Erfahrungswerte mit geringem technischem Aufwand erzielen lassen. Hat man bei einer Serie eines erfindungsgemäßen Scherentyps die Vorverformung bestimmt, kann dieser Wert auf die restlichen Scherenteile dieser Rohlingscharge übertragen werden.

Das erfindungsgemäße Verfahren läßt sich somit mit hoher Zuverlässigkeit und relativ geringem technischen Aufwand durchführen. Insbesondere läßt sich hierdurch eine Friseurschere mit besonders vorteilhaften Eigenschaften herstellen.

Vorteilhafte Weiterbildungen des erfindungsgemäßen Verfahrens sind Gegenstand der abhängigen Ansprüche 2 bis 7.

So kann der Rohling einer Scherenhälfte bereits so ausgebildet sein, daß das Hartmetallmaterial direkt auf die aufeinander zu weisenden Stirnseiten der Scherenblätter aufgetragen werden kann. Alternativ ist es gemäß Anspruch 2 jedoch auch möglich, daß an den Scherenblättern ein Materialabtrag vor deren Vorverformung auf den aufeinander zuweisenden Stirnseiten durchgeführt wird, an denen die Schneiden ausgebildet werden. Dieser Materialabtrag läßt sich dabei ohne weiteres durch Schleifen oder Fräsen bewerkstellen und stellt eine verbesserte Basis für die hierauf aufzutragende Schweißraupe aus Hartmetallmaterial her. Das erfindungsgemäße Verfahren läßt sich hierdurch in noch größerer Zuverlässigkeit und Qualitätssicherheit durchführen.

Für das Aufschweißen des Hartmetallmaterials hat sich in praktischen Versuchen insbesondere ein WIG-Schweißverfahren bewährt, da hiermit eine gute Verbindung sowie eine Schweißraupe hoher Qualität hergestellt werden kann. Daneben kann jedoch auch ein anderes Schutzgasschweißverfahren angewendet werden.

Wenn das Aufschweißen des Hartmetallmaterials unter Zuhilfenahme einer gekühlten Spannvorrichtung erfolgt, läßt sich der Prozeß noch exakter Steuern, wobei insbesondere eine Beeinträchtigung des Trägermaterials, aus dem die Scherenblätter ausgebildet sind, aufgrund der Wärmeeinwirkung vermieden und die Wärmeströme besser gesteuert werden können.

Ferner ist es auch möglich, daß das Hartrichten der Friseurschere ein Vorrichten mittels Hammerschläge umfaßt. Dieses an sich bereits bekannte und in der Praxis für herkömmliche Friseurscheren bewährte Verfahren hat sich entgegen den schlechten Erfahrungen mit aufgespritzten Hartmetallschichten auch bei aufgeschweißten Hartmetallschneiden aus Vollmaterial als vorteilhaft erwiesen, wie praktische Versuche des Anmelders gezeigt haben. Auf diese Weise wird mit relativ geringem fertigungstechnischen Aufwand ein guter und gleichmäßiger Lauf der beiden Schneidkanten ermöglicht.

Dadurch, daß die Oberflächenbearbeitung der Scherenhälften ein Feinschleifen in einem Schritt oder in mehreren Schritten umfaßt, wobei die Innenseiten der Scherenblätter und der Schneiden an einer Korkscheibe unter Verwendung eines Polierschmiergels bzw. einer Polierpaste bearbeitet werden, kann die Leichtgängigkeit der durch dieses Verfahren hergestellten Friseurschere nochmals wesentlich verbessert werden. Die beiden Scherenblätter gleiten somit noch leichter aufeinander ab, so daß der Kraftaufwand zum Schneiden weiter reduziert werden kann. Dabei kann durch den sehr feinen Abtrag der Leichtlauf der Schere in kleinsten Schritten immer mehr dem Optimum genähert werden, was bei den herkömmlichen maschinellen Verfahren speziell bei mit Hartmetall beschichteten Scheren nicht möglich ist.

Von weiterem Vorteil ist es, wenn die Oberflächenbearbeitung der Scherenhälften ein Mattieren der Innenseiten der Scherenblätter und der Schneiden mittels einer Scotch-Scheibe umfaßt. Damit können eventuell nach dem Feinschliffschritt noch vorhandene kleine Schleifspuren, welche auch im Gang der Schere zu spüren sind, beseitigt bzw. so stark vermindert werden, daß sie den Leichtlauf der Schere nicht mehr beeinflussen. Ferner läßt sich hierdurch auch eine verbesserte Korrosionsbeständigkeit der Oberfläche erzielen.

Gemäß einem weiteren Aspekt der vorliegenden Erfindung wird eine Friseurschere mit den Merkmalen des Anspruches 8 geschaffen. Diese ist insbesondere durch ein Verfahren nach einem der Ansprüche 1 bis 7 hergestellt. Sie zeichnet sich dadurch aus, daß die Schneiden als durch Schweißauftrag eines Hartmetalls und nachfolgendem Schleifvorgang ausgebildete, sich über die gesamte Dicke der Scherenblätter erstreckende Vollmaterialelemente an aufeinander zu weisenden Stirnseiten der Scherenblätter angeordnet sind.

Die erfindungsgemäße Friseurschere zeichnet sich somit durch hervorragende Schneideigenschaften bei hoher Widerstandsfähigkeit gegenüber mechanischer Beanspruchungen, großer Langlebigkeit und insbesondere auch durch die Fähigkeit aus, selbst bei spitzen Schneidenwinkel dauerhaft scharf zu bleiben und erforderlichenfalls ohne weiteres nachgeschliffen werden zu können. Weitere Vorteile der erfindungsgemäßen Friseurschere ergeben sich aus den oben mit Bezug auf das Verfahren dargelegten Aspekten.

Dabei sind die innenseiten der Scherenblätter und der Schneiden feingeschliffen und mattiert, um so die Leichtgängigkeit der Friseurschere und/oder deren Korrosionsbeständigkeit zu verbessern.

Darüber hinaus hat sich in praktischen Versuchen ein Hartmetallwerkstoff für die Schneiden als vorteilhaft erwiesen, der aus einer Legierung auf Cobalt-Basis besteht. Hierbei hat sich insbesondere eine Legierung mit 30% Cr, 12% W, 2,5 % C und dem Rest Co (Stellite 1) in Versuchen bewährt, welche eine Härte HRC von 51 bis 58 aufweist. Mit diesem Werkstoff lassen sich die vorteilhaften Eigenschaften der erfindungsgemäßen Friseurschere besonders gut optimieren.

Die Erfindung wird nachfolgend anhand von Ausführungsbeispielen mittels der Figuren der Zeichnung näher erläutert. Es zeigt:
- Fig.1: Eine erfindungsgemäße Friseurschere im geschlossenen Zustand;
- Fig. 2: Die erfindungsgemäße Friseurschere im geöffneten Zustand;
- Fig. 3A bis 3C: Herstellungsschritte am Beispiel einer Scherenhälfte.

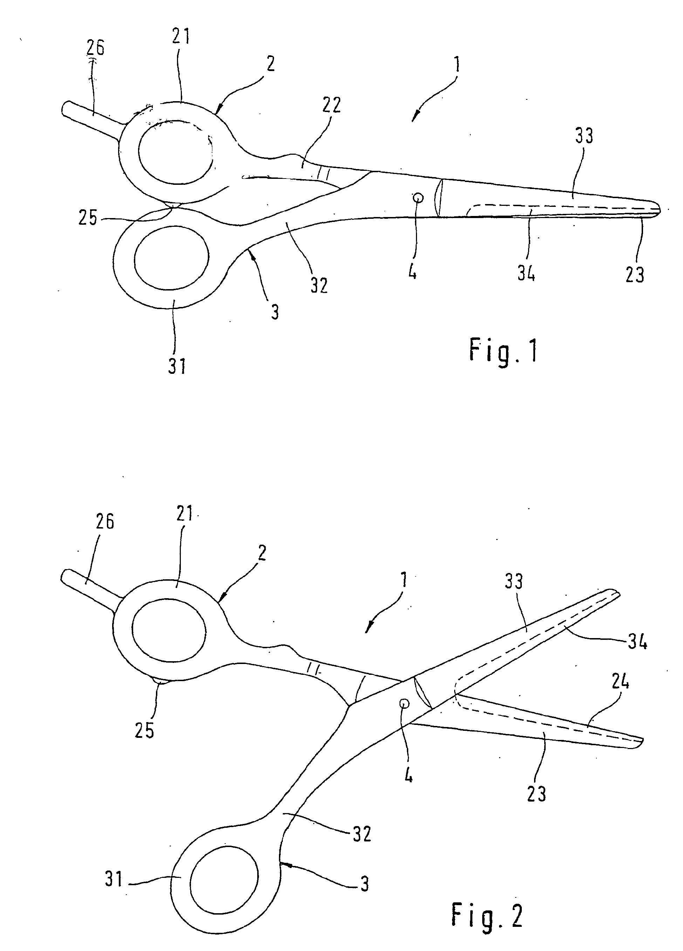

Gemäß der Darstellungen in den Fig. 1 und 2 weist eine Friseurschere 1 zwei Scherenhälften 2 und 3 auf, welche über ein Schloß 4 verschwenkbar miteinander gekoppelt sind. Die Scherenhälfte 2 weist dabei einen Ring 21, einen Halm 22, ein Scherenblatt 23 sowie eine Schneide 24 auf. Darüber hinaus sind am Ring_21 ferner ein Klingenstopper 25 sowie eine Fingerstütze 26 angeordnet. Die Scherenhälfte 3 weist einen Ring 31, einen Halm 32, ein Scherenblatt 33 und eine Schneide 34 auf.

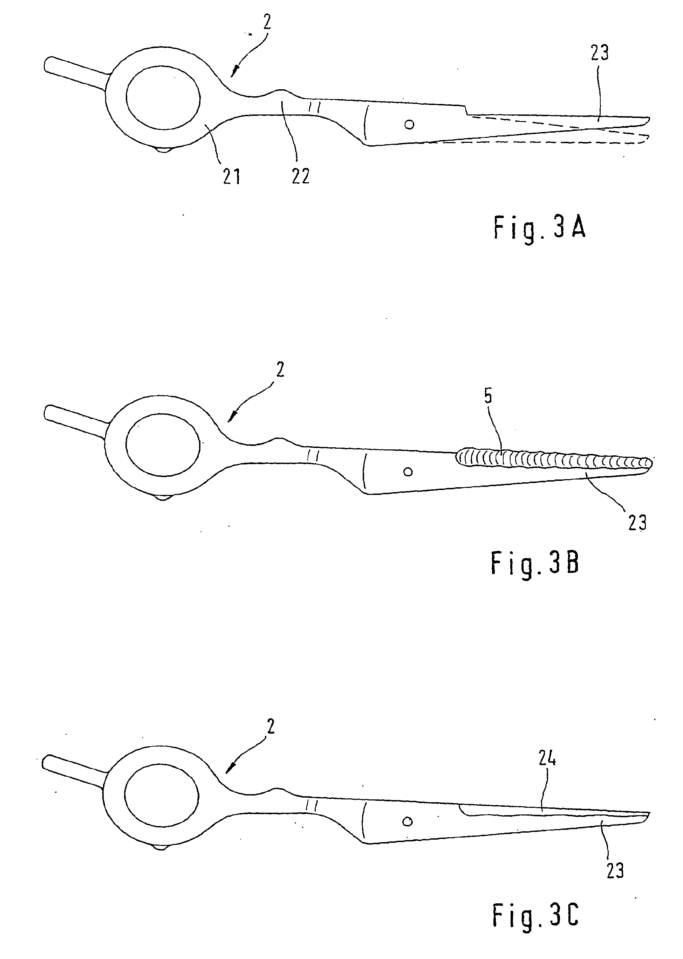

Das Herstellungsverfahren für die Friseurschere 1 wird nachfolgend anhand der Fig. 3A bis 3C am Beispiel der Scherenhälfte 2 erläutert, wobei das Verfahren für die Scherenhälfte 3 analog abläuft.

Hierbei werden die beiden Scherenhälften 2 und 3 zuerst in an sich herkömmlicher Weise bereitgestellt und bearbeitet. So erfolgt insbesondere bereits zu Beginn der Bearbeitung ein Schleifen und Polieren der Innenfläche der Ringe 21 bzw. 31, sowie eine Ausbildung der Bohrungen in den beiden Scherenhälften 2 und 3 mit dem Einschneiden eines Gewindes bzw. dem Ansenken des Schraubenlochs am Gegenstück für das als Schraube ausgebildete Schloss 4. Dann folgen die eigentlichen Schritte zur Ausbildung der Schneiden 24 bzw. 34.

Gemäß der Darstellung in Fig. 3A wird zunächst ein Rohling für die Scherenhälfte 2 bereitgestellt. Das Scherenblatt 23 ist dabei in dem Bereich, in welchem die Schneide 24 ausgebildet wird, ausgespart. Dann wird das Scherenblatt 23 derart verformt, daß es etwa in die strichliert in Fig. 3A dargestellte Stellung in die von der Schneide abgewandte Richtung weggekrümmt ist. Das Maß dieser Vorkrümmung entspricht einem zuvor durch Versuche ermittelten Verformungsgrad des Scherenblattes aufgrund der Wärmeeinwirkung beim nachfolgenden Schweißvorgang.

Gemäß der Darstellung in Fig. 3B wird dann ein Hartmetallmaterial in Form einer Schweißraupe 5 auf die zugeordnete Stirnfläche des Scherenblatts 23 durch ein WIG-Schweißverfahren aufgetragen. Aus dieser Schweißraupe 5 wird anschließend durch einen Schleifschritt die Schneide 24 ausgebildet. Hierbei werden die benachbarten Flächen des Scherenblatts 23 bzw. der Schneide 24 gemeinsam geschliffen, so daß sich ein fluchtender Übergang ergibt. Dies ist insbesondere auf der Innenseite des Scherenblatts 23 von Bedeutung, welche dem Scherenblatt 24 zugewandt ist, da diese Flächen aufeinander abgleiten können. Die Breite der Schneide 24 in Draufsicht auf die Friseurschere 1 gesehen ist dabei im Mittel etwa halb so groß wie die Breite des Scherenblatts 23.

Bei der so hergestellten Scherenhälfte 2 sind das Scherenblatt 23 und die Schneide 24 somit innig miteinander verbunden, wobei das weichere Material des Scherenblatts 23 ein Ausrichten der Friseurschere 1 im zusammengebauten Zustand in exakter Weise zuläßt, und wobei die gute Verschleißbeständigkeit des Hartmetallmaterials der Schneide 24 für hohe Lebensdauer bei gleichbleibend gutem Schnitt sorgt.

Zum Ausrichten werden die beiden Scherenhälften 2 und 3 zusammengedreht bzw. miteinander verbunden und dann gemeinsam ausgerichtet. Der Ausrichtschritt betrifft hierbei insbesondere den Gang und die Form der Schneiden 24 bzw. 34 bzw. der Scherenblätter 23 bzw. 33, sowie die Ringe 21 bzw. 31 und die Branchen. Hierbei werden die Ringe auch in die gewünschte Form bzw. einen gewünschten Anstellwinkel zur Hauptebene der Schere gebogen, damit diese möglichst gut in der Hand liegen. Schließlich folgt eine Nummerierung der Scherenhälften 2 und 3, um deren Zuordnung sicherzustellen, und ein Vorschleifen der Form insgesamt an der Friseurschere 1. Hierauf werden die Scherenhälften 2 und 3 wieder voneinander demontiert bzw. auseinander gebaut und in einem Ultraschallbad bei ca. 80°C ausgewaschen und mit Wasser nachgespült.

Anschließend werden die Scherenhälften 2 und 3 gehärtet. Hierauf folgt ein Polieren der Innenseite der Scherenblätter 23 bzw. 33 an einer Korkscheibe mit einer Polierpaste wie auch des Schlusses an den beiden Scherenhälften 2 und 3. Diese werden dann wiederum miteinander verbunden und anschließend hartgerichtet. Hierbei wird der Gang poliert, die Formgebung insbesondere im Hinblick auf die Stellung der beiden Scherenblätter 23 bzw. 33 zueinander, sowie auch im Hinblick auf die Stellung der Ringe 21 bzw. 31 optimiert. Anschließend wird die Schere komplett vorgeschliffen und danach poliert, wobei eine Körnung von 400 oder 600 zum Einsatz kommt.

In einem nachfolgenden Schritt werden die beiden Scherenhälften 2 und 3 dann erneut voneinander getrennt und durch Bürsten mittels einer Bürstenscheibe und Bürstenschmirgel nochmals oberflächenbehandelt. Hierauf folgt ein Reinigungsschritt der Teile. Dann werden die Scherenhälften 2 und 3 mittels einer Wabbelscheibe und Glänzpaste geglänzt sowie die Innenseiten der Scherenblätter 23 bzw. 33 mattiert. Durch diese Finish-Stufen werden die Oberflächen homogenisiert und optisch ansprechend ausgestaltet.

Hierauf folgt ein erneuter Reinigungsschritt der Scherenhälften 2 und 3 sowie ein erneutes Verbinden derselben entsprechend der einander zugeordneten Nummern an den Teilen. Anschließend wird die Friseurschere 1 fertig ausgerichtet, die als Schloss 4 dienende Schraube korrekt derart angezogen, daß sich der Schaft der Schraube im Gewinde frißt und somit dauerhaft festgelegt ist, und der Gang gerichtet. Dann erfolgt erforderlichenfalls ein erneutes Anschleifen und Polieren der Hartmetallschneiden 24 bzw. 34 sowie eine Reinigung der Teile.

In der vorliegenden Ausführungsform folgt hierauf ein Vergoldungsschritt von Teilen der Friseurschere 1, wobei die Goldstellen mittels einem Klebeband oder dergleichen abgeklebt werden, die Schraube poliert und gefilzt wird, und die Schraube und die Scherenhälften 2 und 3 nach einem weiteren Reinigungsschritt der Vergoldung unterzogen werden.

Danach werden der Klingenstopper 25 sowie die Fingerstütze 26 angebracht und eine erneute Gangkontrolle sowie ein eventuelles Nachschärfen der Schneiden 24 bzw. 34 durchgeführt. Hierauf folgt eine Schnittkontrolle sowie eine Qualitätsprüfung des gesamten Produkts, welches anschließend zur Vermeidung von Korrosion eingeölt wird; die Schere wird dann abgewischt, verpackt und versandfertig gemacht.

Die Erfindung läßt neben der erläuterten Ausführungsform weitere Gestaltungsansätze zu.

So kann die erfindungsgemäße Friseurschere 1 im zusammengedrehten Zustand zuerst an sich herkömmlich mit einem Hammer vorgerichtet werden, um so ein -gewisses Maß an vorteilhafter Ganggenauigkeit und Präzision herzustellen.

Ferner kann auf den Schleifschritt der Scherenblätter 23 bzw. 33 und der Schneiden 24 bzw. 34 ein Feinschleifen in einem Schritt oder in mehreren Schritten folgen. Bei diesem Feinschleifschritt werden die aufeinander zu weisenden Innenseiten der Scherenblätter 23 bzw. 33 und der Schneiden 24 bzw. 34 an einer Korkscheibe mit z. B. 20 mm Dicke bei 1200 U/min unter Verwendung eines speziellen, sehr feinen Polierschmiergels nachbearbeitet.

Überdies können die Innenseiten der Scherenblätter und der Schneiden mittels einer Scotch-Scheibe in einem weiteren Verfahrensschritt mattiert werden, um eventuell auch nach dem Feinschliff- bzw. Poliervorgang evtl. vorhandene kleine Schleifspuren zu beseitigen bzw. so stark zu vermindern, daß sie den Leichtlauf der Schere nicht mehr beeinflussen.

Mit in die gemäß dem erfindungsgemäßen Verfahren vorgesehenen Schleif- und/oder Mattierschritte einbezogen werden kann vorteilhafterweise auch der Bereich der Scherenhälften 2 und 3 rund um das Schloß 4, in welchem diese aufeinander abgleiten und sich gegeneinander führen.

Neben dem erläuterten WIG-Schweißverfahren können auch andere Schweißverfahren zum Aufbringen der Schweißraupe aus Hartmetallmaterial eingesetzt werden, wobei ein Schutzgasschweißverfahren wie WP-, MIG- oder MAG-Schweißen vorgezogen wird. Darüber hinaus ist es auch möglich, das Aufschweißen des Hartmetallmaterials unter Zuhilfenahme einer gekühlten Spannvorrichtung durchzuführen.

Als Material für das Hartmetall hat sich in praktischen Versuchen insbesondere eine Legierung auf Cobalt-Basis bewährt. Vorteilhafterweise werden hierbei Stellite eingesetzt, wobei sich Hartmetall mit einer Härte HRC im Bereich von 50 bis 60 besonders bewährt haben. So kann neben Stellite 1 beispielsweise auch Stellite 4 H oder Stellite 190 etc. zum Einsatz kommen. Daneben ist es jedoch auch möglich, andere Hartmetalle mit vergleichbaren Eigenschaften anzuwenden.

## Patentansprüche

1. Verfahren zur Herstellung einer Friseurschere (1), bei der an den Scherenblättern (23, 33) Schneiden (24, 34) aus Hartmetall angeordnet sind, mit den Schritten:
- Bereitstellen jeweils eines Rohlings für Scherenhälften (2, 3) der Friseurschere (1), wobei die Scherenhälften (2, 3) jeweils ein Scherenblatt (23, 33), einen Halm (22, 32) und einen Ring (21, 31) aufweisen,
- Vorverformen der Scherenblätter (23, 33) um ein vorbestimmtes Krümmungs-maß in die von der Schneide (24, 34) abgewandte Richtung,
- Aufschweißen eines Hartmetallmaterials in Form einer Schweißraupe (S) jeweils auf die aufeinander zu weisenden Stirnseiten der Scherenblätter (23, 33) zur Ausbildung der Hartmetalllagen für die Schneiden (24, 34), wobei sich die vorbestimmte Vorverformung der Scherenblätter (23, 33) aufgrund der Wärmeeinwirkung beim Schweißvorgang im wesentlichen zurückbildet,
- Schleifen der Schweißraupen (S) zur Ausbildung der Schneiden (24, 34),
- Verbinden und anschließendes Ausrichten der Scherenhälften (2, 3),
- Demontieren und anschließendes Härten der Scherenhälften (2, 3),
- Oberflächenbearbeitung der Scherenhälften (2, 3),
- erneutes Verbinden der Scherenhälften (2, 3), und
- Hartrichten der Friseurschere (1).

2. Verfahren nach Anspruch 1, **dadurch gekennzeichnet, daß** vor der Vorverformung der Scherenblätter (23, 33) ein Materialabtrag an den Scherenblättern (23, 33) auf deren aufeinander zu weisenden Stirnseiten, an denen die Schneiden (24, 34) ausgebildet werden, durchgeführt wird.

3. Verfahren nach Anspruch 1 oder 2, **dadurch gekennzeichnet, daß** das Aufschweißen des Hartmetallmaterials durch ein WIG-Schweißverfahren erfolgt.

4. Verfahren nach einem der Ansprüche 1 bis 3, **dadurch gekennzeichnet, daß** das Aufschweißen des Hartmetallmaterials unter Zuhilfenahme einer gekühlten Spannvorrichtung erfolgt.

5. Verfahren nach einem der Ansprüche 1 bis 4, **dadurch gekennzeichnet, daß** das Hartrichten der Friseurschere (1) ein Vorrichten mittels Hammerschläge umfaßt.

6. Verfahren nach einem der Ansprüche 1 bis 5, **dadurch gekennzeichnet, daß** die Oberflächenbearbeitung der Scherenhälften (2, 3) ein Feinschleifen in einem Schritt oder in mehreren Schritten umfaßt, wobei die Innenseiten der Scherenblätter (23, 33) und der Schneiden (24, 34) an einer Korkscheibe unter Verwendung einer Polierpaste bearbeitet werden.

7. Verfahren nach einem der Ansprüche 1 bis 6, **dadurch gekennzeichnet, daß** die Oberflächenbearbeitung der Scherenhälften (2, 3) ein Mattieren der Innenseiten der Scherenblätter (23, 33) und der Schneiden (24, 34) mittels einer Scotch-Scheibe umfaßt.

8. Friseurschere (1), mit zwei Scherenhälften (2, 3), die jeweils ein Scherenblatt (23, 33), einen Halm (22, 32) und einen Ring (21, 31) aufweisen und an einer Gelenkstelle mittels einem Schloß (4) gelenkig miteinander gekoppelt sind, sowie mit Schneiden (24, 34) aus Hartmetall an den Scherenblättern (23, 33), **dadurch gekennzeichnet,**
- **daß** die Schneiden (24, 34) als durch Schweißauftrag eines Hartmetalls und nachfolgendem Schleifvorgang ausgebildete, sich über die gesamte Dicke der Scherenblätter (23, 33) erstreckende Vollmaterialelemente an aufeinander zu weisenden Stirnseiten der Scherenblätter (23, 33) angeordnet sind, und
- **daß** die Immenseiten der Scherenblätter (23, 33) und der Schneiden (24, 34) zur Verbesserung der Leichtgängigkeit der Friseurschere eine feingeschliffene und mattierte Oberfläche aufweisen.

9. Friseurschere nach Anspruch 8, **dadurch gekennzeichnet, daß** das Hartmetall der Schneiden (24, 34) aus einer Legierung auf Cobalt-Basis besteht, wie z.B. einer Legierung mit 30% Cr, 12% W, 2,5% C und dem Rest Co, welche eine Härte HRC von 51 bis 58 aufweist.

## Claims

1. A method for manufacturing barber scissors (1) wherein edges (24, 34) of hard metal are arranged on the scissor blades (23, 33), comprising the steps:
- furnishing one blank each for scissor halves (2, 3) of the barber scissors (1), with the scissor halves (2, 3) each comprising a scissor blade (23, 33), a shank (22, 32), and a ring (21, 31),
- pre-shaping the scissor blades (23, 33) by a predetermined degree of curvature in the direction facing away from the edge (24, 34),
- welding on a hard metal material in the form of a welding bead (S) on the respective mutually facing faces of the scissor blades (23, 33) in order to form the hard metal layers for the edges (24, 34), wherein the predetermined pre-forming of the scissor blades (23, 33) is substantially neutralized owing to the influence of heat during the welding process,
- grinding of the welding beads (S) so as to form the edges (24, 34),
- combining and subsequently setting the scissor halves (2, 3),
- disassembly and subsequent hardening of the scissor halves (2, 3),
- surface treatment of the scissor halves (2, 3),
- again combining the scissor halves (2, 3), and
- hard-setting the barber scissors (1).

2. The method in accordance with Claim 1, **characterized in that** prior to pre-forming of the scissor blades (23, 33), a removal of material is performed on the scissor blades (23, 33) on their mutually facing faces on which the edges (24, 34) are to be formed.

3. The method in accordance with Claim 1 or 2, **characterized in that** welding on of the hard metal material is performed with a TIG welding process.

4. The method in accordance with any one of Claims 1 to 3, **characterized in that** welding on of the hard metal material is performed with the aid of a cooled clamping device.

5. The method in accordance with any one of Claims 1 to 4, **characterized in that** hard-setting of the barber scissors (1) includes pre-setting by mean of hammer blows.

6. The method in accordance with any one of Claims 1 to 5, **characterized in that** the surface treatment of the scissor halves (2, 3) includes a fine-grinding in one step or in several steps, wherein the insides of the scissor blades (23, 33) and of the edges (24, 34) are worked on a cork disc by using a polishing paste.

7. The method in accordance with any one of Claims 1 to 6, **characterized in that** the surface treatment of the scissor halves (2, 3) includes matting of the insides of the scissor blades (23, 33) and of the edges (24, 34) by means of a Scotch disc.

8. Barber scissors (1) comprising two scissor halves (2, 3) each including a scissor blade (23, 33), a shank (22, 32), and a ring (21, 31) and articulatedly coupled with each other in an articulation by means of a lock (4), and including edges (24, 34) of hard metal on the scissor blades (23, 33), **characterized**
**in that** the edges (24, 34) are formed as massive elements extending over the entire thickness of the scissor blades (23, 33) on mutually facing faces of the scissor blades (23, 33), which are formed by welding application of a hard metal and a subsequent grinding step, and
**in that** the insides of the scissor blades (23, 33) and of the edges (24, 34) have a fine-ground and matted surface in order to improve easy movement of the barber scissors.

9. The barber scissors in accordance with Claim 8, **characterized in that** the hard metal of the edges (24, 34) is comprised of a cobalt-based alloy such as, e.g., an alloy including 30% of Cr, 12% of W, 2.5% of C and the remainder Co, which has a hardness HRC of 51 to 58.

## Revendications

1. Procédé de fabrication de ciseaux de coiffure (1), où des tranchants (24, 34) en carbure sont prévus contre les lames (23, 33), comportant les étapes suivantes :
- préparation d'une ébauche pour chaque moitié (2, 3) des ciseaux de coiffure (1), lesdites moitiés de ciseaux (2, 3) comportant chacune une lame (23, 33), une branche (22, 32) et un anneau (21, 31),
- pré-déformation des lames (23, 33) avec un gauchissement défini dans le sens opposé au tranchant (24, 34),
- soudage d'une matière carbure sous la forme d'un cordon de soudure (S) sur chacune des faces frontales opposées des lames (23, 33) pour former les couches de carbure pour les tranchants (24, 34), la pré-déformation définie des lames (23, 33) étant sensiblement annulée sous l'effet de la chaleur dégagée pendant le soudage,
- rectification des cordons de soudure (S) pour former les tranchants (24, 34),
- assemblage et ajustement consécutif des moitiés de ciseaux (2, 3),
- démontage et trempage consécutif des moitiés de ciseaux (2, 3),
- usinage de surface des moitiés de ciseaux (2, 3),
- nouvel assemblage des moitiés de ciseaux (2, 3), et
- ajustage des ciseaux de coiffure (1).

2. Procédé selon la revendication 1, **caractérisé en ce qu'**avant la pré-déformation des lames (23, 33), il est procédé à un enlèvement de matière sur les faces frontales opposées des lames (23, 33) contre lesquelles les tranchants (24, 34) seront formés.

3. Procédé selon la revendication 1 ou la revendication 2, **caractérisé en ce que** la matière carbure est soudée par procédé de soudage WIG.

4. Procédé selon l'une des revendications 1 à 3, **caractérisé en ce que** la matière carbure est soudée à l'aide d'un dispositif de serrage refroidi.

5. Procédé selon l'une des revendications 1 à 4, **caractérisé en ce que** l'ajustage des ciseaux de coiffure (1) comprend une préparation par martelage.

6. Procédé selon l'une des revendications 1 à 5, **caractérisé en ce que** l'usinage de surface des moitiés de ciseaux (2, 3) comprend une rectification fine en une ou plusieurs étapes, les faces intérieures des lames (23, 33) et des tranchants (24, 34) étant usinées sur un disque en liège en recourant à une pâte de polissage.

7. Procédé selon l'une des revendications 1 à 6, **caractérisé en ce que** l'usinage de surface des moitiés de ciseaux (2, 3) comprend un dépolissage des faces intérieures des lames (23, 33) et des tranchants (24,34) au moyen d'un disque scotch.

8. Ciseaux de coiffure (1), avec deux moitiés (2, 3) de ciseaux comportant chacune une lame (22, 23), une branche (22, 32) et un anneau (21, 31), et articulées l'une à l'autre au moyen d'une entablure (4) sur un point d'articulation, et avec des tranchants (24, 34) en carbure sur les lames (23, 33), **caractérisés en ce que**
- les tranchants (24, 34) sont prévus sur des faces frontales opposées des lames (23, 33), en tant qu'éléments en matériau massif réalisés par soudage d'un carbure et rectification consécutive et s'étendant sur toute l'épaisseur des lames (23, 33),
et
- **en ce que** les faces intérieures des lames (22, 23) et des tranchants (24, 34) présentent une surface finement rectifiée et matée pour améliorer la maniabilité des ciseaux de coiffure.

9. Ciseaux de coiffure selon la revendication 8, **caractérisés en ce que** le carbure des tranchants (24, 34) se compose d'un alliage à base de cobalt, tel qu'un alliage avec 30 % de Cr, 12 % de W, 2,5 % de C et le reste de Co, présentant une dureté HRC comprise entre 51 et 58.
